Europäisches Patentamt

European Patent Office

Office européen des brevets

(11) Veröffentlichungsnummer: **0 546 318 B1**

(12) **EUROPÄISCHE PATENTSCHRIFT**

(45) Veröffentlichungstag der Patentschrift: **12.07.95**

(51) Int. Cl.6: **F02D 41/14**

(21) Anmeldenummer: **92118866.0**

(22) Anmeldetag: **04.11.92**

(54) **Verfahren und Vorrichtung zur Ermittlung der Konvertierungsfähigkeit eines Katalysators.**

(30) Priorität: **10.12.91 DE 4140618**

(43) Veröffentlichungstag der Anmeldung:
**16.06.93 Patentblatt 93/24**

(45) Bekanntmachung des Hinweises auf die
Patenterteilung:
**12.07.95 Patentblatt 95/28**

(84) Benannte Vertragsstaaten:
**DE ES IT**

(56) Entgegenhaltungen:
**WO-A-89/11030**
**WO-A-90/05240**
**WO-A-91/14861**

(73) Patentinhaber: **ROBERT BOSCH GMBH**
**Postfach 30 02 20**
**D-70442 Stuttgart (DE)**

(72) Erfinder: **Schnaibel, Eberhard, Dipl.-Ing.**
**Hochstetterstrasse 1/5**
**W-7241 Hemmingen (DE)**
Erfinder: **Schneider, Erich, Dipl.-Ing.**
**Storchenweg 4**
**W-7125 Kirchheim (DE)**
Erfinder: **Reuschenbach, Lutz, Dipl.-Phys.**
**Happoldstrasse 67**
**W-7000 Stuttgart 30 (DE)**
Erfinder: **Blischke, Frank, Dr. Dr.-Ing.**
**Hohenheimerstrasse 35**
**W-7000 Stuttgart 1 (DE)**

## Beschreibung

Stand der Technik

Die Erfindung betrifft ein Verfahren und eine Vorrichtung zur Diagnose des Zustandes von Katalysatoren, die zur Reduzierung der Schadstoffemissionen beim Betrieb von Brennkraftmaschinen eingesetzt werden.

Es ist im Interesse möglichst geringer Schadstoffemissionen wünschenswert, Katalysatoren mit verminderter Konvertierungsfähigkeit zu erkennen und zu ersetzen. So existieren gesetzgeberische Forderungen nach Systemen, die in der Lage sind, den Rückgang der Konvertierungsfähigkeit mit Bordmitteln (On Board Diagnose) zu diagnostizieren. Bei bekannten Systemen, (US 4 622 809) werden dazu die Signale von jeweils einer ersten vor dem Katalysator angeordneten Lambdasonde, die auch als Regelsonde dient, und einer hinter dem Katalysator angeordneten zweiten Abgassonde zu Diagnosezwecken verglichen.

Dazu wird die durch die Zweipunkt-Charakteristik des Gemischregelverfahrens bedingte periodische Schwingung des Lambdawertes ausgenutzt, die sich zumindest in stationären Betriebszuständen einstellt. Der Mittelwert dieser Schwingung entspricht idealerweise dem Regelsollwert, bspw. Lambda = 1. Die Halbperioden, in denen mageres Gemisch vorliegt, sind mit einem Sauerstoffüberschuß im Abgas verbunden, während in den anderen Halbperioden Sauerstoffmangel aufgrund fetter Gemischzusammensetzung vorliegt. Aufgrund seiner Fähigkeit, sowohl den Sauerstoffmangel als auch den Sauerstoffüberschuß innerhalb gewisser Grenzen zu puffern, übt der Katalysator einen mittelnden Einfluß auf den Sauerstoffgehalt des Abgases aus. Dieser Einfluß wird bei den bekannten Verfahren durch einen Vergleich der Amplituden der vor und hinter dem Katalysator angeordneten Abgassonden erfaßt und zur Beurteilung der Konvertierungsfähigkeit herangezogen.

Ein Nachteil der angegebenen Verfahren liegt in der ausgeprägten Abhängigkeit der Signalamplituden von anderen individuellen Parametern wie der Temperatur und der chemischen und thermischen Alterung jeder einzelnen der beiden Sonden. Die Beurteilung der Konvertierungsfähigkeit nach diesen Verfahren ist daher mit entsprechenden Unsicherheiten behaftet. Auf der einen Seite kann dies dazu führen, daß Katalysatoren, die die gesetzlichen Anforderungen nicht mehr erfüllen, nicht erkannt werden, so daß die Schadstoffemission ansteigt. Andererseits ist es auch möglich, daß noch gute Katalysatoren bereits als fehlerhaft beurteilt werden und möglicherweise mit wirtschaftlichen Nachteilen für den Fahrzeugbesitzer zu früh ausgetauscht werden.

Die Aufgabe der Erfindung besteht in der Angabe eines Verfahrens und einer Vorrichtung zur Beurteilung der Konvertierungsfähigkeit von Katalysatoren, das nicht mit den genannten Unsicherheiten behaftet ist. Die Erfindung löst diese Aufgabe mit den Merkmalen der unabhängigen Verfahrens- und Vorrichtungsansprüche. Vorteilhafte Ausgestaltungen der Erfindung sind Gegenstand der Unteransprüche. Versuche haben ergeben, daß die Durchführung des Verfahrens zuverlässige Aussagen darüber erlaubt, ob der Katalysator noch die Einhaltung der durch den Gesetzgeber vorgeschriebenen Abgasgrenzwerte ermöglicht.

Zeichnung

Ausführungsbeispiele des erfindungsgemäßen Verfahrens und der entsprechenden Vorrichtung finden sich in den Zeichnungen und werden in der nachfolgenden Beschreibung näher erläutert.

Fig. 1 zeigt ein Ausführungsbeispiel zur Ermittlung der Konvertierungsfähigkeit eines Katalysators in Blockdarstellung.

Fig. 2 a-e offenbart beispielhaft Signalabläufe, wie sie an verschiedenen Stellen der Vorrichtung nach Fig. 1 auftreten können.

Fig. 3 veranschaulicht die Auswertung der Signalabläufe aus Fig. 2 und zeigt zusätzlich weitere Varianten des erfindungsgemäßen Verfahrens (3b, 3c und 3d).

Fig. 4 stellt Signalverläufe dar, wie sie bei der Durchführung weiterer Ausführungsbeispiele des erfindungsgemäßen Verfahrens auftreten können.

Fig. 5 offenbart Flußdiagramme zur rechnergesteuerten Durchführung des erfindungsgemäßen Verfahrens.

Beschreibung von Ausführungsbeispielen

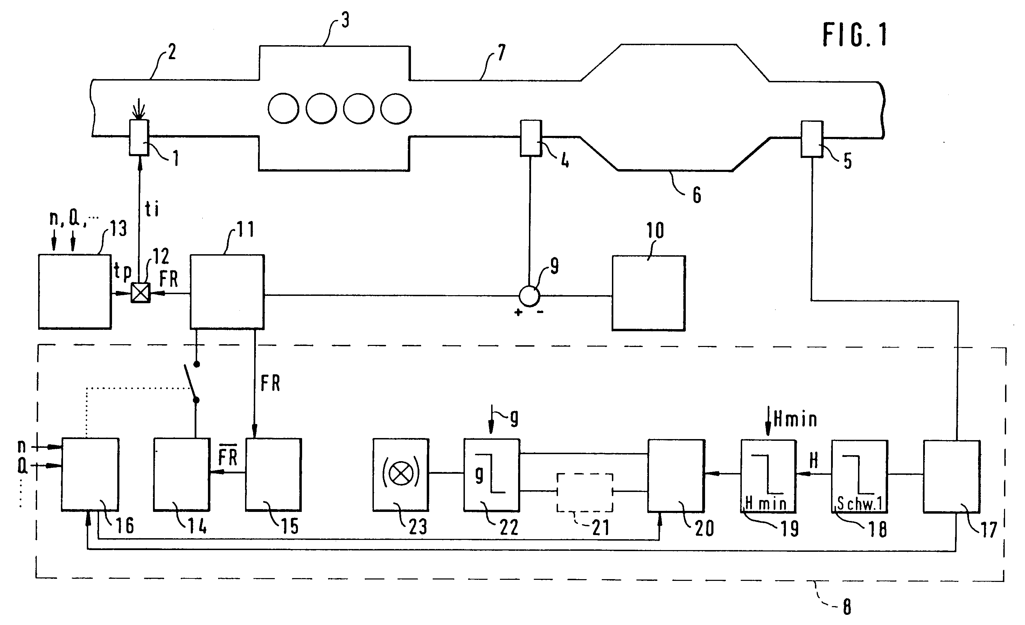

Die Fig. 1 zeigt ein mit 1 bezeichnetes Kraftstoffzumeßmittel im Ansaugrohr einer Brennkraftmaschine 3. Je eine Abgassonde 4 und 5 ist vor, bzw. nach einem Katalysator 6 im Abgasrohr 7 der Brennkraftmaschine angeordnet. Weiterhin ist ein Vergleichsmittel 9 für das Ausgangssignal der Abgassonde 4 mit einem Regelsollwert, ein Sollwertgebermittel 10, ein Regler 11, ein Multiplikationsmittel 12 sowie ein Vorsteuermittel 13 vorhanden. Diese bereits aus dem Stand der Technik bekannte Anordnung wird um den gestrichelt gezeichneten Komplex 8 ergänzt. Dieser umfaßt ein Mittel 14 zur Speicherung und Ausgabe von Reglerparametern bzw. Steuerwerten zur Beeinflussung des Verhaltens des Reglers 11, ein Mittel 15 zur Mittelung eines Regelfaktors FR, ein Ablaufsteuerungsmittel 16, ein Signalfilter 17 für das Signal der Abgassonde 5, einen Schwellwertdetektor 18, ein Mittel 19 zur Feststellung der Häufigkeit, mit der der Schwellwert im Mittel 18 überschritten wird, ein Mittel 20 zur Erfassung der Mittelwertverschiebung, optional ein Mittel 21 zur Bildung des Mittelwerts von Verschiebungen gemäß einer Variante des Ausführungsbeispiels, ein Mittel 22 zum Vergleich der Mittelwertverschiebung mit einem Grenzwert und ein Mittel 23 zur Ausgabe und/oder Speicherung eines Fehlersignals.

Beim Betrieb der Brennkraftmaschine werden Vorsteuerwerte tp aus dem Vorsteuermittel 13 in der Multiplikationsstufe 12 mit einem Regelfaktor FR multipliziert. Mit dem so erhaltenen Kraftstoffzumeßsignal ti wird das Kraftstoffzumeßmittel 1, bspw. ein Einspritzventil angesteuert. Das so im Ansaugrohr 2 gebildete Kraftstoff/Luft-Gemisch gelangt nach der Verbrennung in der Brennkraftmaschine 3 als Abgas in das Abgasrohr 7, in dem jeweils durch die Abgassonden 4 und 5 der Restsauerstoffgehalt des Abgases erfaßt wird. Das Signal der Sonde 4 wird in dem Vergleichsmittel 9 mit einem Sollwert aus dem Sollwertgebermittel 10 verglichen. Das Vergleichsergebnis dient als Eingangsgröße für den PI-Regler 11, der als Ausgangssignal den bereits erwähnten Regelfaktor FR herausgibt. In den meisten Fällen wird auf einen Lambdawert von 1 geregelt, da sich bei diesem Wert ein Optimum der Konvertierung der verschiedenen Schadstoffe in dem Katalysator 6 ergibt. Der durch die katalytische Reaktion und durch die Sauerstoffspeicherung des Katalysators veränderte Sauerstoffgehalt des Abgases wird durch die zweite Abgassonde 5 erfaßt.

Soweit wie bisher beschrieben ist der Regelkreis mit dem Katalysator und einer ersten, als Regelsonde vor dem Katalysator angebrachten Abgassonde und einer zweiten Abgassonde, die den Sauerstoffgehalt des Abgases hinter dem Katalysator erfaßt, aus dem Stand der Technik bekannt.

Zur Durchführung des erfindungsgemäßen Verfahrens dienen darüberhinaus die im folgenden beschriebenen Komponenten aus dem gestrichelt gezeichneten Komplex 8, die in bestimmten Betriebszuständen zur Durchführung des erfindungsgemäßen Verfahrens aktiviert werden. Das Mittel 14 zur gesteuerten Beeinflussung des Regelfaktors FR greift in einer solchen, vom Ablaufsteuerungsmittel 16 ausgelösten Testphase in die Regelschwingung so ein, daß sich der Mittelwert des Regelfaktors in vorbestimmter Weise verschiebt. Ein Signalfilter 17, das nur verhältnismäßig schnelle Änderungen des Signals der Abgassonde 5 weitergibt und eine langsame Änderung blockiert, ist zwischen der Abgassonde 5 und dem Schwellwertdetektor 18 angeordnet. Jedesmal wenn eine schnelle Änderung im Signal der Abgassonde 5 eintritt und die Änderung größer als ein vorbestimmter Schwellwert ist (Schw.1), wird dieses Ereignis vom Mittel 18 registriert, das daraus ein Signal H für die Häufigkeit dieser Ereignisse bildet und diese Häufigkeit mit einem vorbestimmten Schwellwert Hmin vergleicht. Eine solche schnelle Änderung liegt vor allem dann vor, wenn sich ein Wechsel in der Gemischzusammensetzung von fett nach mager oder umgekehrt im Signal der hinteren Abgassonde 5 bemerkbar macht.

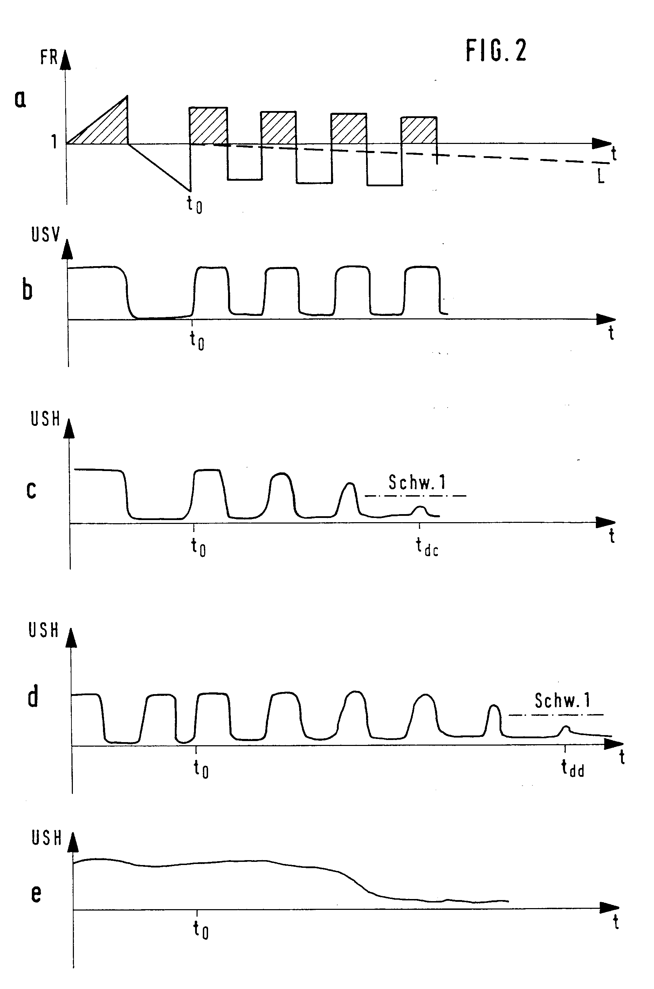

Aufgrund des bereits erwähnten mittelnden Einflusses des Katalysators auf den Sauerstoffgehalt des Abgases ist dies z.B. bei einem neuwertigen Katalysator im allgemeinen nicht der Fall. In diesem Fall, in dem die Abgassonde 5 auch im normalen Regelungsbetrieb kein Abbild des Signalverlaufs der Abgassonde 4 liefert, (siehe Fig. 2e), besitzt das erfindungsgemäße Verfahren keine Vorteile gegenüber dem Stand der Technik. Dies beeinträchtigt jedoch nicht die Brauchbarkeit des Verfahrens, da dieses Verhalten einen neuwertigen Katalysator charakterisiert, der ohnehin noch über seine maximale Konvertierungsfähigkeit verfügt. Über die Verbindung des Filters 17 zur Ablaufsteuerung 16 kann das Auslösen der Katalysatortestfunktion für diesen Fall unterdrückt werden.

Wenn dagegen die Katalysatortestfunktion ausgelöst wurde, und die Häufigkeit H des Signalpegelwechsels der hinteren Sonde den Schwellwert Hmin nicht mehr überschreitet, wird das Maß der bis zu diesem Zeitpunkt erreichten Mittelwertverschiebung a oder b, bspw. durch eine Messung der Zeitdauer zwischen Auslösen des Verfahrens und Unterschreiten von Hmin, durch das Mittel 20 erfaßt und im Vergleichsmittel 22 mit einem Grenzwert g verglichen, dessen Festlegung sich an den Erfordernissen der Abgasgesetzgebung orientiert. Ein Katalysator, dessen Konvertierungsfähigkeit nicht mehr den gesetzlichen Anforderungen entspricht, zeichnet sich dadurch aus, daß der Wert a oder b der für ihn festgestellten Mittelwertverschiebung den festgelegten Grenzwert g überschreitet. Für diesen Fall ist ein Mittel 23 vorgesehen, das dem Fahrer diesen Fehler signalisiert oder für spätere Kontrollen, bspw. im Rahmen eines Wartungsdienstes abspeichert. Einige der angegebenen Mittel werden vorteilhafterweise durch Rechnerfunktionen realisiert.

Die Durchführung des erfindungsgemäßen Verfahrens läßt sich anhand der Fig. 2 beschreiben, in der verschiedene Signalverläufe über der Zeit dargestellt sind. So zeigt Fig. 2a den Verlauf des Regelfaktors FR und Fig. 2b das dazu korrespondierende Signal USV der vorderen Abgassonde 4. Die Fig. 2c und d stellen zugehörige Signalverläufe USH(t) der hinteren Sonde 5 dar, wie sie sich bei zwei verschiedenen Alterungsstufen des Katalysators 6 einstellen können. Fig. 2e zeigt dagegen das Signal USH der hinteren Abgassonde, wie es bei einem neuwertigen Katalysator auftritt. Wie bereits erwähnt soll das erfindungsgemäße Verfahren in diesem Fall nicht durchgeführt werden. Die in diesem Fall noch nicht durch Alterungserscheinungen eingeschränkte Sauerstoffspeicherfähigkeit des Katalysators führt dazu, daß sein Einfluß auf den Sauerstoffgehalt des Abgases die Regelschwingung im wesentlichen ausmittelt, so daß die hintere Abgassonde nicht das Signalverhalten der vorderen Abgassonde widerspiegelt. Dieser Zustand des Katalysators kann daher erkannt werden, indem überprüft wird, ob das Signal der hinteren Sonde mit einer Mindesthäufigkeit den Signalpegel wechselt.

Es sei an dieser Stelle angemerkt, daß zeitliche Verschiebungen zwischen den Signalen, die unvermeidlicherweise durch Gaslaufzeiten auftreten und die bspw. entscheidend zum Entstehen der Lambdaschwingung im normalen Regelungsbetrieb beitragen, aus Gründen des besseren Verständnisses nicht dargestellt wurden.

In der Fig. 2a führt der Regelfaktor FR zunächst die bekannte, durch Proportional- und Integralanteile gekennzeichnete Regelschwingung um den Mittelwert 1 aus. Im Anschluß daran wird ab dem Zeitpunkt to der gezeigte FR-Verlauf gesteuert. Der Übergang sollte dabei so erfolgen, daß der Flächeninhalt des ersten schraffierten Rechtecks ungefähr dem Flächeninhalt eines der links von to liegenden Dreiecke entspricht. Auf diese Weise wird eine sprunghafte Änderung der Katalysatorbelastung vermieden.

In diesem Ausführungsbeispiel handelt es sich um einen Rechteckverlauf mit langsam variiertem Offset, wodurch der Mittelwert des Signals langsam auf der gestrichelt gezeichneten Linie L zu FR-Werten kleiner 1 hinunterläuft. Unter der Voraussetzung der beschriebenen multiplikativen Beeinflussung der Kraftstoffmenge durch den Regelfaktor führt dies zu einer Magerverschiebung des mittleren Lambdawerts.

Während der Zeitspannen, in denen FR größer als 1 ist, liegt fettes Gemisch und damit Sauerstoffmangel vor. In diesen Zeiten wird vorher im Katalysator gespeicherter Sauerstoff abgebaut und die schraffiert gezeichneten Flächen können daher als Maß für den Sauerstoffmangeleintrag in den Katalysator betrachtet werden. Analog dazu repräsentieren die unter der FR = 1-Linie (Magerphasen) liegenden Flächen einen Sauerstoffüberschuß-Eintrag. Es wird deutlich, daß die Sauerstoffmangeleinträge in diesem Beispiel sukzessive abnehmen.

Wie aus Fig. 2b ersichtlich ist, zeigt die vor dem Katalysator angeordnete Abgassonde 4 keine signifikante Reaktion auf die Modulation der Gemischzusammensetzung. Das Signal USV zeigt jeweils den fett-mager bzw. den umgekehrten Wechsel an, wobei ein tiefer Signalpegel für Sauerstoffüberschuß charakteristisch ist.

Andere Verhältnisse ergeben sich bei den Abbildungen 2c und 2d, die das korrespondierende Signal USH der hinteren Abgassonde für zwei verschiedene Alterungsstufen des Katalysators darstellen.

Dabei verfügt der Katalysator im Fall der Kurve 2c noch über die vergleichsweise größere Sauerstoffspeicherfähigkeit und damit über die höhere Konvertierungsfähigkeit.

Beide Signalverläufe kommen wie folgt zustande: Beim Beginn der Testphase (t0) sind die jeweiligen Sauerstoffmangeleinträge größer als die in den vorhergehenden Sauerstoffüberschußphasen im Katalysator gespeicherten Sauerstoffmengen, so daß sich der Sauerstoffmangel auch im Signal der Abgassonde 5 bemerkbar macht.

Dabei wird davon ausgegangen, daß die Sauerstoffspeicherfähigkeit des Katalysators zu Beginn der Testphase kleiner als der Sauerstoffmangeleintrag ist. Die Parameter der Gemischmodulation müssen dementsprechend auf das Katalysatorvolumen abgestimmt sein.

Aufgrund des für t>t0 vorliegenden Übergewichts der unter der Nullinie liegenden, nicht schraffierten Rechteckflächen, die den Sauerstoffeintrag repräsentieren, wird der Katalysator in den Magerphasen (FR<1) jeweils bis zur Grenze seiner Sauerstoffspeicherfähigkeit belastet.

Die hintere Abgassonde registriert die Fettphase (FR>1) dann, wenn der jeweilige Sauerstoffmangeleintrag größer als die Sauerstoffspeicherfähigkeit des Katalysators ist.

Mit weiter fortschreitender Testdauer wird der Sauerstoffmangeleintrag sukzessive kleiner und unterschreitet schließlich die im Katalysator speicherbare Sauerstoffmenge. Die in Sauerstoffüberschußphasen gespeicherte Sauerstoffmenge wird dann nicht mehr durch den Sauerstoffmangeleintrag kompensiert und das Signal USH der Abgassonde 5 erreicht in diesem Fall nicht mehr den als gestrichelte Linie gezeichneten Schwellwert Schw.1 und zeigt nur noch mageres Gemisch an. Je kleiner die Sauerstoffspeicherfähigkeit des Katalysators ist, desto später wird dieser Zeitpunkt, der in der Fig. 2d mit tdd bezeichnet ist, eintreten. Auf diese Weise wird der Betrag des Sauerstoffmangeleintrages gewissermaßen als Kriterium für die Sauerstoffspeicherfähigkeit des Katalysators verwendet. Wie bereits erwähnt, wird der in Fig. 2d dargestellte Signalverlauf bei einem vergleichsweise älteren Katalysator mit bereits stark reduzierter Sauerstoffspeicherfähigkeit auftreten.

Ganz analog läßt sich im Falle einer gezielten Fettverschiebung der Sauerstoffeintrag als Kriterium verwenden, wobei die jeweiligen Sauerstoffeinträge in den Fettphasen vollständig abgebaut werden.

Hervorzuheben ist, daß in beiden Fällen der mittlere Lambdawert solange verschoben wird, bis das Signal der hinteren Abgassonde nicht mehr springt. Durch das erfindungsgemäße Verfahren gelingt es somit gewissermassen die Sprungcharakteristik der hinteren Abgassonde zur Katalysatordiagnose heranzuziehen. Aufgrund der vergleichsweise guten Stabilität der Lage des Sprungs im Abgassondenausgangssignal bezüglich Temperaturänderung und Alterungserscheinungen ergeben sich die Vorteile des erfindungsgemäßen Verfahrens.

In der Praxis wird man nicht auf das einmalige Ausbleiben des Sondensignalwechsels warten, das evtl. auch einmal durch statistische Schwankungserscheinungen im Abgasstrom hervorgerufen werden kann. Vielmehr wird beobachtet, ob der Vergleichsschwellwert Schw.1 in einer vorgegebenen Zeitspanne mit einer vorbestimmten Mindesthäufigkeit H>Hmin durchlaufen wird. Außerdem bleibt anzumerken, daß die verhältnismäßig große Steigung der Mittelwertverschiebung lediglich aus Gründen der besseren zeichnerischen Darstellung gewählt wurde. In der Praxis wird man die Steigung aus Gründen der Auflösung des Verfahrens geringer wählen, so daß das Signal der hinteren Abgassonde den Schwellwert zwischen Testbeginn und Ende wesentlich öfter passiert als dargestellt.

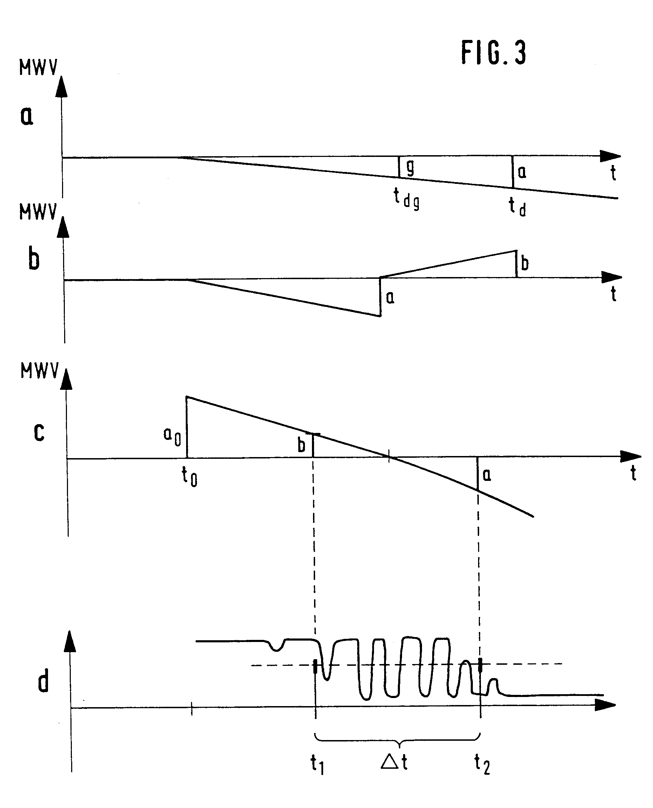

Die Fig. 3a verdeutlicht den Zusammenhang zwischen der Zeitdauer td und dem Betrag der zugehörigen Mittelwertverschiebung a. Der Wert tdg dient als unterer Grenzwert für die Beurteilung des Konvertierungsvermögens. Ist der während einer Testphase ermittelte Wert td, der wie gezeigt auf eindeutige Weise der Mittelwertverschiebung a zugeordnet ist, größer als dieser Grenzwert, so wird dies als Zeichen für einen nicht mehr ausreichend funktionsfähigen Katalysator gewertet.

Das Testergebnis kann jedoch verfälscht werden, wenn als Startpunkt der Verschiebung nicht der wirkliche Lambda-Mittelwert gewählt wird. Um Fehldiagnosen auszuschließen, ist es daher sinnvoll, vor dem Beginn der Verschiebung bspw. den Wert des Regelfaktors FR oder des Signals der vorderen Abgassonde über einige Schwingungsperioden zu mitteln und den erhaltenen Wert als Startwert für die Verschiebung zu benutzen.

Weiterhin kann dieser Mittelwert durch Vergiftungs- oder Alterungserscheinungen der Regelsonde 4 gegenüber dem erwünschten Lambdawert von 1 verschoben sein. Die Verfälschung des Testergebnisses durch diesen Fehler, der sich durch die angegebene Mittelung nicht eliminieren läßt, kann durch das in der Fig. 3b oder auch durch das in der Fig 3c und d dargestellte Verfahren kompensiert werden.

Bei dem in der Fig. 3b dargestellten Verfahren wird der Mittelwert der Regellage nacheinander in beide Richtungen verschoben und das Ausmaß der jeweiligen Verschiebungen a und b erfaßt. Die wirkliche Mittelwertverschiebung ergibt sich dann als Mittelwert aus den Verschiebungen a,b in beide Richtungen. In Fig. 3b stellt bspw. a die Magerverschiebung und b die Fettverschiebung dar.

Eine weitere Möglichkeit ist das Ausführen einer Verschiebung von "genügend fett" nach "genügend mager" oder umgekehrt in einem Zug, hier erhält man gleich die Gesamt-Verschiebungsbreite, während der sich das Signal der vorderen Sonde im Signal der hinteren Sonde widerspiegelt.

Diese Vorgehensweise ist in den Fig. 3c und d dargestellt.

Fig.3c zeigt den Betrag der Mittelwertverschiebung über der Zeit für diese Ausführungsform und Fig. 3d zeigt das dazu korrespondierende Signal der hinteren Sonde. Gestartet wird der Test zum Zeitpunkt to mit einer Mittelwertverschiebung a0 nach fett. Diese Anfangsverschiebung ist so groß zu wählen, daß die verbleibenden (verkleinerten) Überschußeinträge kleiner sind als die Sauerstoffspeicherkapazität eines noch guten Katalysators. In diesem Fall reicht der Überschußeintrag nicht aus, um die aufgrund der jeweils vorhergehenden Belastung des Katalysators durch Sauerstoffmangel freigewordenen Sauerstoffspeicherplätze zu besetzen. Die Sonde 5 wird daher zunächst im Mittel nur Sauerstoffmangel (fettes Gemisch) registrieren. Bei abnehmender Mittelwertverschiebung vergrößern sich die Überschußeinträge bis sich zu dem Zeitpunkt t1 die Gemischmodulation auch im Signal der hinteren Sonde bemerkbar macht. Eine weitergehende Mittelwertverschiebung in den Magerbereich führt dann (Zeitpunkt t2) dazu, daß die hintere Sonde im Mittel keinen Sauerstoffmangel mehr registriert, da jetzt die Mangeleinträge nicht mehr ausreichen, um die in den vorhergehenden Überschußphasen besetzten Sauerstoffspeicherplätze zu entleeren. Je größer die Zeitspanne t = t2-t1 bzw die zugehörige Mittelwertverschiebung a + b ist, desto schlechter ist der Katalysator. Wie bereits erwähnt, läßt sich dieses Verfahren auch in umgekehrter Richtung, also mit einer im mageren Bereich beginnenden Mittelwertverschiebung durchführen.

In der Fig. 2a ist die Mittelwertverschiebung der Gemischzusammensetzung beispielhaft durch einen gesteuerten Rechteckverlauf mit langsam variiertem Offset dargestellt.

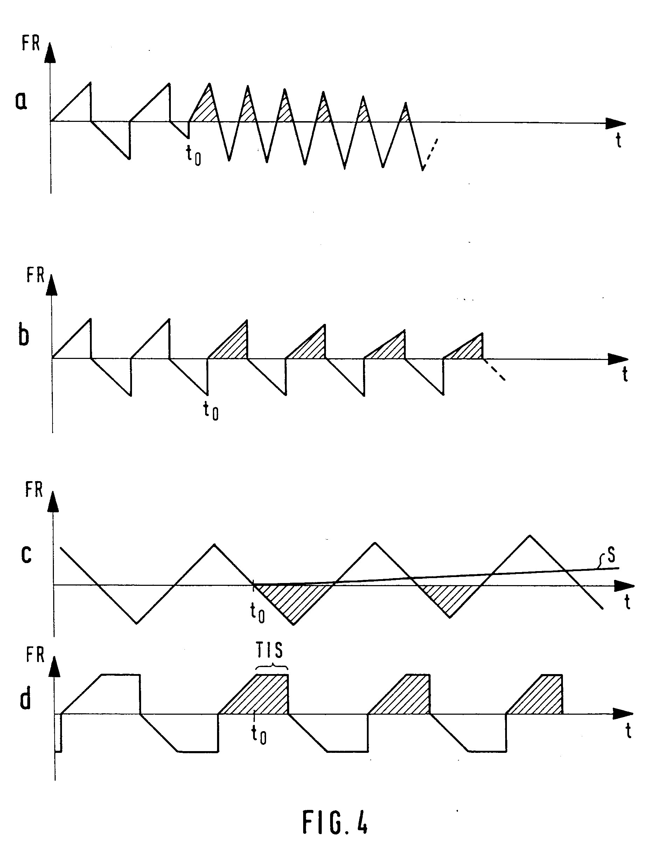

Die Erfindung beschränkt sich jedoch nicht auf diese spezielle Signalform, sondern umfaßt vielmehr alle weiteren Signalverläufe, die eine Verschiebung des Mittelwerts bewirken. Ein weiteres Beispiel für einen Steuerungseingriff auf die Gemischbildung ist in der Fig. 4a dargestellt, die einen Dreiecksverlauf mit langsam variiertem Offset zeigt.

Neben diesen gesteuerten Verläufen der Gemischbildung kann das erfindungsgemäße Verfahren auch unter Beibehaltung des Regelungsbetriebs durchgeführt werden. Beispiele dazu finden sich in den Fig. 4b, c und d. Im Verfahren nach der Fig. 4b werden die Integratorsteigungen und die Proportionalsprünge verkleinert, während im Fall der Fig. 4d die Zeit TIS, in der der Integrationswert ohne Änderungen beibehalten wird, schrittweise verringert wird. In der Fig. 4c ist ein FR-Verlauf dargestellt, wie er sich bei einer Verschiebung des Regelschwellwertes längs der gestrichelt gezeichneten Linie S ergibt. Im Gegensatz zu den anderen dargestellten Beispielen wird in diesem Fall in Richtung fett verschoben. Wesentlich zur Durchführung des erfindungsgemäßen Verfahrens ist in allen Fällen die sukzessive Verkleinerung der schraffierten Flächen, die bei der in den Beispielen dargestellten Mittelwertverschiebung ein Maß für den jeweiligen Sauerstoffmangel oder Überschußeintrag in den Katalysator darstellen.

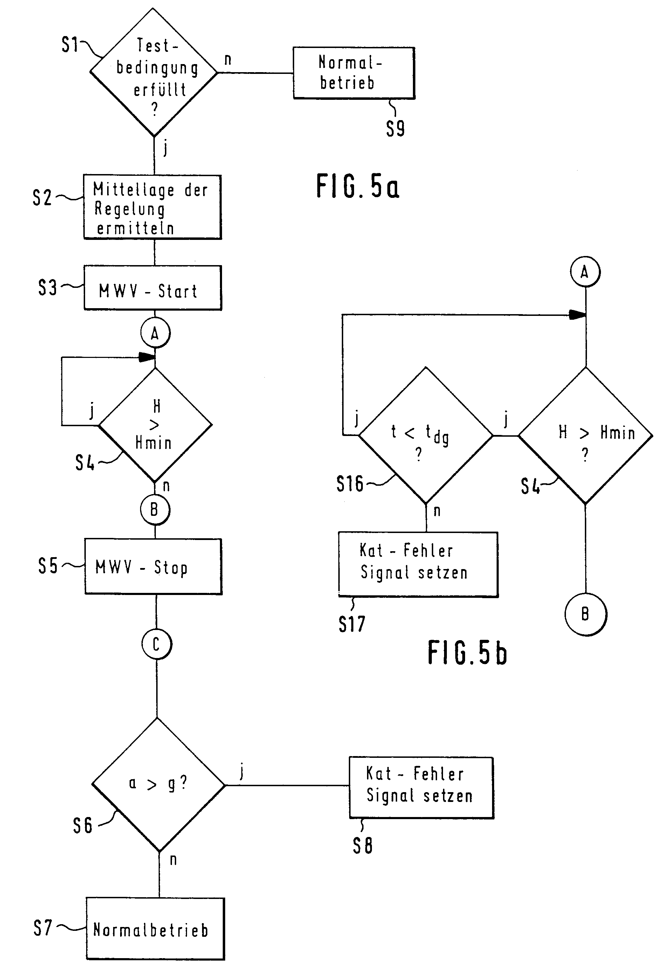

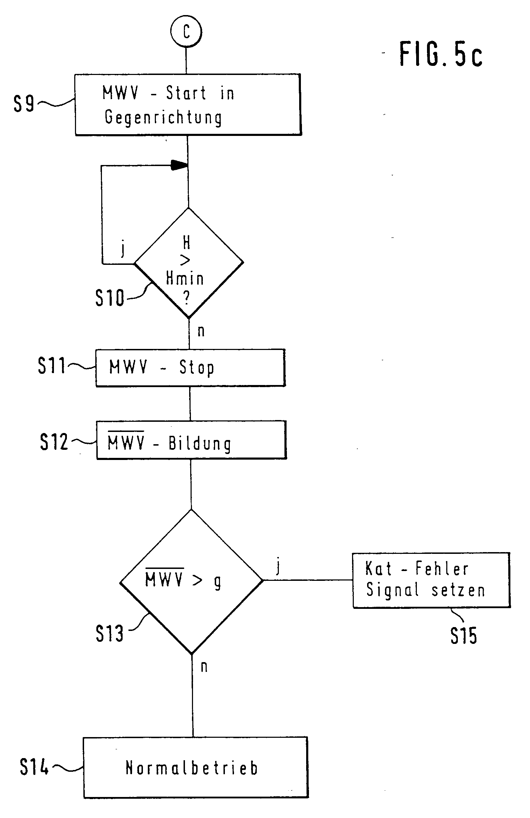

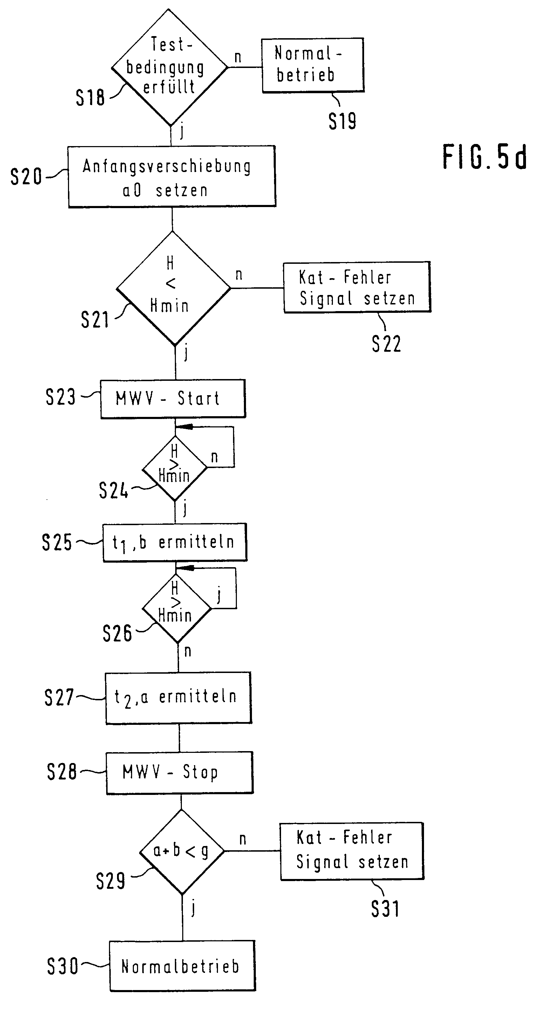

Die Fig. 5 offenbart Beispiele von Flußdiagrammen zur rechnergesteuerten Durchführung des erfindungsgemäßen Verfahrens.

Nach Fig. 5a wird in einem Schritt S1 zunächst geprüft, ob die zur Testdurchführung notwendigen Voraussetzungen erfüllt sind. Dazu zählen insbesondere: Ablauf einer Mindestbetriebszeit seit der letzten Testdurchführung, um den Test nicht unnötig oft auszuführen, Betriebsbereitschaft der beiden Sonden, ausreichende Temperatur von Brennkraftmaschine und Katalysator, zumindest zeitweise Widerspiegelung der Gemischmodulation im Signal der hinteren Sonde auch schon während des normalen Regelungsbetriebes und das Vorliegen eines Betriebszustandes mit konstanter geringer Last, bspw. des Leerlaufs. Ist eine der Voraussetzungen nicht erfüllt, so wird der Normalbetrieb beibehalten (Schritt S9). Andernfalls wird in einem Schritt S2 die Mittelage der Regelung ermittelt und in dem Schritt S3 als Startwert für die Mittelwertverschiebung MWV benutzt.

In einem Schritt S4 wird anschließend geprüft, ob das Signal der hinteren Sonde den Schwellwert Schw.1 in einer vorgegebenen Zeitspanne weiterhin mit einer vorbestimmten Mindesthäufigkeit H>Hmin passiert. Dieser Schritt wird bei weiter zunehmender Verschiebung des Lambdamittelwerts wiederholt ausgeführt bis die Abfrage verneint wird. In diesem Fall wird die Mittelwertverschiebung gestoppt und der bis dahin erreichte Wert a in einem Schritt S5 festgestellt. Anschließend findet in dem Schritt S6 ein Vergleich von a mit einem Grenzwert g statt, der die Grenze zwischen ausreichender und nicht mehr ausreichender Konvertierungsfähigkeit markiert. Bei Überschreiten dieses Grenzwertes wird ein Signal, das diesen Fehlerzustand kennzeichnet, in dem Schritt S8 ausgegeben. Ist die Konvertierungsfähigkeit dagegen noch ausreichend, wird in dem Schritt S7 ohne Verzögerung wieder auf Normalbetrieb umgeschaltet.

Das Flußdiagramm nach der Fig. 5b stellt eine Abwandlung des beschriebenen Verfahrens dar. Die Verfahrensschritte S4, S16 und S17 ersetzen dabei den Verfahrensschritt S4 aus der Fig. 5a. Die Abwandlung besteht im wesentlichen darin, daß jetzt in dem Schritt S16 zusätzlich geprüft wird, ob die Testdauer t, während der die Mittelwertverschiebung bereits anhält, kleiner ist als ein Grenzwert tdg, bis zu dem ein noch funktionsfähiger Katalysator hätte erkannt werden müssen. Eine Überschreitung dieses Grenzwertes führt in dem Schritt S17 zur Ausgabe eines entsprechenden Fehlersignals.

Das Flußdiagramm nach der Fig. 5c enthält zusätzlich Verfahrensschritte, wie sie zur Durchführung des Verfahrens nach dem Ausführungsbeispiel der Fig. 3b benötigt werden. Dazu schließt sich an die Marke C aus Fig.5a ein Schritt S9 an, in dem die Mittelwertverschiebung zur anderen Richtung hin gestartet wird. Ist bspw. bis zur Marke C der Wert a für die Magerverschiebung ermittelt worden, so wird jetzt auf analoge Weise im Schritt S11 ein Wert b für die Fettverschiebung ermittelt, in dem der Schritt S10 bei zunehmender Fettverschiebung solange durchlaufen wird, bis der Schwellwert Schw.1 nicht mehr genügend oft vom Signal der hinteren Sonde unterschritten wird. Dabei kann der Betrag des Schwellwertes Schw.1 im Fall der Fettund der Magerverschiebung verschieden sein. In dem Schritt S12 schließt sich die Bildung des Mittelwerts aus den Verschiebungen a und b an. Abhängig vom Ergebnis des Vergleichs dieses Mittelwerts mit dem vorgegebenen Grenzwert g in dem Schritt S13 wird dann in dem Schritt S15 ein Fehlersignal ausgegeben oder aber ohne Ausgabe eines Signals in dem Schritt S14 wieder auf Normalbetrieb umgeschaltet.

Die Fig. 5d bezieht sich auf das Ausführungsbeispiel der Fig. 3c und d. Zunächst wird wie bei den bereits geschilderten Ausführungsbeispielen geprüft, ob die Testbedingungen erfüllt sind. Dieser mit S18 bezeichnete Schritt entspricht dem Schritt S1 aus Fig. 5a. Bei Verneinung der Abfrage wird der Normalbetrieb beibehalten (Schritt S19). Andernfalls erfolgt eine Anfangsverschiebung a0 des Mittelwertes des Regelfaktors im Schritt S20. Schritt S21 steht für die Prüfung, ob nach der Verschiebung im Mittel genügend wenig Schwellwertdurchgänge des Signals USH der hinteren Sonde erfolgen. Ist dies bereits bei dem Anfangswert der Mittelwertverschiebung nicht der Fall, so erfolgt eine Fehlermeldung im Schritt S22. Bei den in der Fig. 3 dargestellten Verhältnissen ist die in S21 geprüfte Bedingung jedoch zunächst erfüllt und es schließt sich ein Schritt S23 an, in dem die Mittelwertverschiebung MWV, jetzt ausgehend von dem Anfangswert a0, gestartet wird. In der Folge wird der Schritt S24 wiederholt durchlaufen bis Schwellwertdurchgänge von USH mit einer Mindesthäufigkeit H>Hmin auftreten. Ist dies der Fall, wird im Schritt S25 der aktuelle Wert der Mittelwertverschiebung, gegeben durch die Werte b oder t1 aus Fig. 3c,d ermittelt. Bei weiter erfolgender Mittelwertverschiebung wird durch wiederholtes Durchlaufen des Schrittes 25 in Verbindung mit dem Schritt S27 ermittelt, bis zu welchem Wert (a oder t2 in Fig. 3c,d) die Schwellwertdurchgänge mit der Mindesthäufigkeit Hmin auftreten. Anschließend wird die Mittelwertverschiebung in dem Schritt S28 gestoppt und in dem Schritt S29 wird die Gesamtmittelwertverschiebung a+b berechnet um mit einem vorgegebenen Grenzwert verglichen zu werden. Bei Überschreitung des Grenzwertes erfolgt eine Fehlermeldung im Schritt S31, andernfalls wird in dem Schritt S30 wieder zu dem Normalbetrieb zurückgekehrt.

**Patentansprüche**

1. Beurteilungsverfahren der Konvertierungsfähigkeit eines Katalysators, der die Menge unerwünschter Schadstoffkomponenten im Abgas einer Brennkraftmaschine reduziert, die mit einer Lambdaregelung und einer vor dem Katalysator angeordneten, als Regelsonde dienenden ersten Abgassonde und einer zweiten, hinter dem Katalysator angeordneten Abgassonde ausgerüstet ist, dadurch gekennzeichnet, daß zur Beurteilung der Sauerstoffspeicherfähigkeit das Kraftstoffzumeßsignal in bestimmten Betriebszuständen moduliert wird und daß der Mittelwert dieses modulierten Kraftstoffzumeßsignals solange gezielt verschoben wird, bis entweder das Signal der zweiten Abgassonde vorgegebene Schwellwerte nicht mehr passiert und daß dann vom Ausmaß der benötigten Verschiebung auf die Sauerstoffspeicherfähigkeit geschlossen wird, oder daß die Mittelwertverschiebung solange durchgeführt wird, bis das Signal der hinteren Sonde bei noch funktionsfähigem Katalysator vorgegebene Schwellwerte nicht mehr passieren dürfte und daß bei dann weiter auftretenden Schwellwertdurchgängen die Sauerstoffspeicherfähigkeit als nicht mehr ausreichend beurteilt wird und daß bei nicht ausreichender Sauerstoffspeicherfähigkeit eine Fehlermeldung erfolgt.

2. Verfahren nach Anspruch 1, dadurch gekennzeichnet, daß der Mittelwert des Kraftstoffzumeßsignals in Richtung zu einer magereren oder einer fetteren Gemischzusammensetzung verschoben wird, oder daß das Ausmaß der Verschiebung sowohl zur fetten als auch zur mageren Seite ermittelt wird und daß dann aus der Größe der Summe beider Verschiebungen auf die Sauerstoffspeicherfähigkeit geschlossen wird.

3. Verfahren nach mindestens einem der Ansprüche 1 oder 2, dadurch gekennzeichnet, daß die Verschiebung des Mittelwerts im Regelungsbetrieb durchgeführt wird über unterschiedliche Proportionalanteile oder Integralanteile, oder über eine unsymmetrische Umschaltverzögerung beim mager-fett-Wechsel und beim fett-mager-Wechsel, oder über eine Veränderung des Schwellwertes für das Signal der zur Regelung verwendeten Sonde.

4. Verfahren nach mindestens einem der Ansprüche 1 oder 2, dadurch gekennzeichnet, daß die Verschiebung des Mittelwerts über die Steuerung eines vorgegebenen Lambda-Verlaufs, ausgehend von der Mittellage des Lambdareglers, erzielt wird.

5. Verfahren nach Anspruch 4, dadurch gekennzeichnet, daß ein Dreieckverlauf mit langsam variiertem Offset gesteuert wird.

6. Verfahren nach mindestens einem der Ansprüche 1-5, dadurch gekennzeichnet, daß es nur ausgeführt wird, wenn die Amplitude des Signals der hinter dem Katalysator angeordneten Sonde einen Schwellwert mit einer Mindesthäufigkeit überschreitet.

7. Beurteilungsvorrichtung der Konvertierungsfahigkeit eines Katalysators, der die Menge unerwünschter Schadstoffkomponenten im Abgas einer Brennkraftmaschine reduziert, die mit einer Lambdaregelung und einer vor dem Katalysator angeordneten, als Regelsonde dienenden ersten Abgassonde und einer zweiten, hinter dem Katalysator angeordneten Abgassonde ausgerüstet ist, dadurch gekennzeichnet, daß Mittel vorhanden sind, die zur Beurteilung der Sauerstoffspeicherfähigkeit das Kraftstoffzumeßsignal in bestimmten Betriebszuständen modulieren und dabei den Mittelwert dieses modulierten Kraftstoffzumeßsignals solange gezielt verschieben, bis ein Schwellwertdetektor keine Durchgänge des Signals der zweiten Abgassonde durch vorgegebene Schwellwerte mehr registriert und daß Mittel vorgesehen sind, die dann vom Ausmaß der benötigten Verschiebung auf die Sauerstoffspeicherfähigkeit schliessen, oder daß Mittel vorgesehen sind, die die Mittelwertverschiebung solange durchgefühen, bis das Signal der hinteren Sonde bei noch funktionsfähigem Katalysator vorgegebene Schwellwerte nicht mehr passieren dürfte und daß dann, wenn der Schwellwertdetektor weitere Schwellwertdurchgänge registriert, Mittel die Sauerstoffspeicherfähigkeit als nicht mehr ausreichend beurteilen und daß dann ein Mittel zur Anzeige oder Speicherung eines Fehlers aktiviert wird.

8. Vorrichtung nach Anspruch 7, dadurch gekennzeichnet, daß Mittel vorhanden sind, die das Ausmaß der Verschiebung sowohl zur fetten als auch zur mageren Seite ermitteln.

9. Vorrichtung nach den Ansprüchen 7 bis 8, dadurch gekennzeichnet, daß Mittel vorhanden sind, die feststellen, ob die Amplitude des Signals der hinter dem Katalysator angeordneten Sonde einen Schwellwert mit einer Mindesthäufigkeit überschreitet.

## Claims

1. Method for assessing the conversion efficiency of a catalyst which reduces the quantity of unwanted pollutant components in the exhaust gas of an internal combustion engine, which is fitted with a closed-loop lambda control system and a first exhaust-gas probe, arranged ahead of the catalyst and serving as a control probe, and a second exhaust-gas probe, arranged after the catalyst, characterized in that, to assess the oxygen storage capacity, the fuel metering signal is modulated in certain operating states and in that the average of this modulated fuel metering signal is shifted in a specific way until either the signal of the second exhaust-gas probe no longer passes specified threshold values and a conclusion is then drawn from the extent of the shift required as to the oxygen storage capacity or in that the shifting of the average is carried out until the signal of the rear probe ought not to pass specified threshold values if the catalyst is still functional and in that, if the threshold-value passes then continue to occur, the oxygen storage capacity is assessed as no longer sufficient and in that a fault is reported if the oxygen storage capacity is insufficient.

2. Method according to Claim 1, characterized in that the average of the fuel metering signal is shifted towards a leaner or a richer mixture composition or in that the extent of the shift both in the rich and in the leaner direction is determined and in that the oxygen storage capacity is then inferred from the magnitude of the sum of the two shifts.

3. Method according to at least one of Claims 1 and 2, characterized in that the shifting of the average is carried out in closed-loop control node by means of different proportional components or integral components or by means of an asymmetrical changeover delay in the lean to rich change and in the rich to lean change or by means of an alteration to the threshold value for the signal of the probe used for control.

4. Method according to at least one of Claims 1 and 2, characterized in that the shifting of the average is achieved by controlling a specified lambda characteristic starting from the central position of the lambda controller.

5. Method according to Claim 4, characterized in that a triangular characteristic with a slowly varying offset is controlled.

6. Method according to at least one of Claims 1-5, characterized in that it is only carried out if the amplitude of the signal of the probe arranged after the catalyst exceeds a threshold value with a minimum frequency.

7. Device for assessing the conversion efficiency of a catalyst which reduces the quantity of unwanted pollutant components in the exhaust gas of an internal combustion engine, which is fitted with a closed-loop lambda control system and a first exhaust-gas probe, arranged ahead of the catalyst and serving as a control probe, and a second exhaust-gas probe, arranged after the catalyst, characterized in that there are means which, to assess the oxygen storage capacity, modulate the fuel metering signal in certain operating states, and, in the process, shift the average of this modulated fuel metering signal in a specific way until a threshold-value detector no longer records any passes of the signal of the second exhaust-gas probe through specified threshold values, and in that means are provided which then infer the oxygen storage capacity from the extent of the shift required, or in that means are provided which carry out the shifting of the average until the signal of the rear probe ought not to pass specified threshold values if the catalyst is still functional, and in that if the threshold-value detector records further threshold-value passes, means assess the oxygen storage capacity as no longer sufficient and in that a means for indicating or storing a fault is then activated.

8. Device according to Claim 7, characterized in that there are means which determine the extent of the shift both in the rich and in the lean direction.

9. Device according to Claims 7 to 8, characterized in that there are means which determine whether the amplitude of the signal of the probe arranged after the catalyst exceeds a threshold value with a minimum frequency.

**Revendications**

1. Procédé pour juger la capacité de conversion d'un catalyseur qui réduit la quantité de composants polluants gênants contenus dans les gaz d'échappement d'un moteur à comoustion interne, équipé d'une régulation lambda et d'une première sonde de gaz d'échappement servant de sonde de régulation en amont du catalyseur et d'une seconde sonde de gaz d'échappement en aval du catalyseur, caractérisé en ce que, pour juger de la capacité d'absorption d'oxygène, on module le signal de dosage de carburant en des intervalles de fonctionnement définis et on déplace, de manière dirigée la valeur moyenne de ce signal de dosage de carburant, modulé, jusqu'à ce que, soit le signal de la seconde sonde ne dépasse plus le seuil fixé, et partant de l'amplitude du décalage nécessaire, on en déduit la capacité d'absorption d'oxygène, soit on effectue le décalage de la valeur moyenne jusqu'à ce que le signal de la sonde aval ne devrait plus dépasser le seuil prédéterminé, le catalyseur étant encore apte à fonctionner, et en ce que, pour les passages du seuil se produisant à nouveau, on juge la capacité d'absorption de l'oxygène comme insuffisante et en ce que, lorsque la capacité d'absorption d'oxygène est insuffisante, on signale un défaut.

2. Procédé selon la revendication 1, caractérisé en ce que la valeur moyenne du signal de dosage de carburant est déplacée dans la direction d'une composition d'un mélange pauvre ou d'un mélange riche et en ce qu'on détermine l'amplitude du déplacement, à la fois vers le côté riche et vers le côté pauvre, puis à partir de l'amplitude de la somme des deux décalages, on conclut à la capacité d'absorption de l'oxygène.

3. Procédé selon au moins l'une des revendications 1 ou 2, caractérisé en ce qu'on effectue le décalage de la valeur moyenne en mode de régulation par des composantes proportionnelles ou intégrales, différentes, ou par un retard asymétrique de commutation à l'alternance maigre/riche et à l'alternance riche/maigre ou en modifiant le seuil pour le signal de la sonde servant à la régulation.

4. Procédé selon au moins l'une des revendications 1 ou 2, caractérisé en ce qu'on décale la valeur moyenne par la commande d'une courbe prédéterminée lambda en partant de la position médiane du régulateur lambda.

5. Procédé selon la revendication 4, caractérisé en ce qu'on commande un tracé triangulaire avec un décalage modifié.

6. Procédé selon au moins l'une des revendications 1 à 5, caractérisé en ce qu'il n'est effectué que si l'amplitude du signal de la sonde en aval du catalyseur dépasse un seuil avec une fréquence minimale.

7. Dispositif pour juger de la capacité de conversion d'un catalyseur réduisant la teneur de composants polluants gênants contenus dans les gaz d'échappement d'un moteur à combustion interne, comprenant une régulation lambda et une première sonde de gaz d'échappement servant de sonde de régulation en amont du catalyseur et une seconde sonde de gaz d'échappement en aval du catalyseur, caractérisé par des moyens pour apprécier la capacité d'absorption d'oxygène, qui modulent le signal de dosage de carburant dans des intervalles de fonctionnement déterminés et déplacent la valeur moyenne de ce signal de dosage de carburant jusqu'à ce qu'un détecteur de seuil n'enregistre plus de passages du signal de la seconde sonde de gaz d'échappement par un seuil prédéterminé et des moyens qui, à partir de l'amplitude du décalage nécessaire, concluent à la capacité d'absorption de l'oxygène ou par des moyens qui effectuent le décalage de la valeur moyenne jusqu'à ce que le signal de la sonde en aval ne devrait plus passer le seuil prédéterminé, le catalyseur étant encore apte à fonctionner et lorsque le détecteur de seuil enregistre d'autres passages du seuil, des moyens considèrent que le capacité d'absorption d'oxygène n'est plus suffisante et activent alors un moyen pour afficher ou enregistrer un défaut.

8. Dispositif selon la revendication 7, caractérisé par des moyens qui déterminent l'importance du décalage à la fois vers le côté du mélange riche et vers le côté du mélange pauvre.

**9.** Dispositif selon les revendications 7 et 8, caractérisé par des moyens qui constatent si l'amplitude du signal de la sonde, en aval du catalyseur, dépasse un seuil avec une fréquence minimale.

FIG.1

FIG. 2

EP 0 546 318 B1

FIG. 3

13

FIG. 4

FIG. 5a

FIG. 5b

**FIG. 5c**

S9 — MWV - Start in Gegenrichtung

S10 — H > Hmin ? → j

S11 — MWV - Stop

S12 — $\overline{MWV}$ - Bildung

S13 — $\overline{MWV}$ > g → j — Kat - Fehler Signal setzen — S15

n

S14 — Normalbetrieb

**FIG.5d**

S18 — Test-bedingung erfüllt —n→ Normal-betrieb — S19

↓ j

S20 — Anfangsverschiebung a0 setzen

↓

S21 — H < Hmin —n→ Kat-Fehler Signal setzen — S22

↓ j

S23 — MWV-Start

↓

S24 — H > Hmin —n→ (loop back)

↓ j

S25 — $t_1, b$ ermitteln

↓

S26 — H > Hmin —j→ (loop back)

↓ n

S27 — $t_2, a$ ermitteln

↓

S28 — MWV-Stop

↓

S29 — a+b < g —n→ Kat-Fehler Signal setzen — S31

↓ j

S30 — Normalbetrieb